# EUROPÄISCHE PATENTSCHRIFT

(11) **EP 0 805 445 B1**
(45) Veröffentlichungstag und Bekanntmachung des Hinweises auf die Patenterteilung: **13.02.2002**
(21) Anmeldenummer: 97201328.8
(22) Anmeldetag: 02.05.1997
(51) Int. Cl.: G11B 17/04

(54) **Lademechanismus zum Be- und Entladen eines informationstechnischen Gerätes mit einer Informationsplatte**
Loading mechanism for loading and unloading of an information disc in an information-technical apparatus
Mécanisme de chargement pour charger et décharger un disque d'information d'un appareil technique d'information

(30) Priorität: 02.05.1996 EP 96201215; 03.07.1996 DE 19626759
(43) Veröffentlichungstag der Anmeldung: 05.11.1997
(73) Patentinhaber: Philips Corporate Intellectual Property GmbH, 52064 Aachen (DE); Koninklijke Philips Electronics N.V., 5621 BA Eindhoven (NL)
(72) Erfinder: Scholz, Thomas, Röntgenstrasse 24, 22335 Hamburg (DE); Noordhoek, Harald, Röntgenstrasse 24, 22335 Hamburg (DE); Gielkens, Marc, Röntgenstrasse 24, 22335 Hamburg (DE)
(74) Vertreter: Hartmann, Heinrich, Dipl.-Ing.

(56) Entgegenhaltungen:
- EP-A- 0 516 496
- DE-A- 3 421 947
- DE-A- 4 139 034
- US-A- 4 682 320
- US-A- 4 979 160
- US-A- 5 163 040
- PATENT ABSTRACTS OF JAPAN vol. 008, no. 188 (P-297), 29.August 1984 & JP 59 075461 A (SANYO DENKI KK;OTHERS: 01), 28.April 1984,

## Beschreibung

Die Erfindung betrifft einen Lademechanismus zum Be- und Entladen eines informationstechnischen Gerätes mit einer Informationsplatte, wobei für den Plattenrand eine erste und eine zweite jeweils eine Nut aufweisende Führung vorgesehen sind, wobei die zweite Führung ein drehend antreibbares Transportrad aufweist, das die Informationsplatte zum Laden in einer Ladeebene in das Gerät hineinrollt bzw. zum Entladen aus diesem herausrollt, und die erste und die zweite Führung bewegbar gelagert sind.

Ein derartiger Lademechanismus ist aus der US 51 63 040 bekannt. Die Informationsplatte bei diesem bekannten Lademechanismus wird auf der einen Seite als erste Führung von einer starren, kurvenförmigen und genuteten Führung und auf der anderen Seite als zweite Führung von einem genuteten Transportrad geführt. Um die Informationsplatte in des Gerät einzuführen, wird diese von Hand in einen Öffnungsschlitz des Gerätes eingesteckt und mit den Nuten der ersten Führung und des Transportrades in Eingriff gebracht. Das Transportrad wird beim Ladevorgang von einem Motor angetrieben, und die Informationsplatte wird zwischen dem Transportrad und der ersten Führung auf einer kurvenförmigen Ladebahn in das Gerät eingerollt. Die Nuten der ersten Führung und des Transportrades sind jeweils V-förmig ausgebildet.

In der US 4 682 320 A ist ebenfalls ein solcher Lademechanismus offenbart. Auch hier wird die Informationsplatte auf der einen Seite von einer starren Führung und auf der anderen Seite von einem Transportrad geführt, welches beim Ladevorgang von einem Motor angetrieben wird. An Stelle der starren Führung kann hier alternativ auch ein zweites angetriebenes Transportrad vorhanden sein.

Eine derartige Konstruktion weist jedoch eine Reihe von Nachteilen auf. Bedingt durch die kurvenförmige erste Führung ist es nur möglich, die Informationsplatte auf einer kurvenförmigen Ladebahn entlang der ersten Führung in das Gerät einzuführen, eine geradlinige Einführung ist jedoch nicht möglich. Dies erfordert im Vergleich zu einer geradlinigen Einführung der Informationsplatte eine größere Breite des Lademechanismus und damit auch des Gerätes. Insbesondere für den Einsatz im Automobilbereich ist dies ein erheblicher Nachteil, da dort der zur Verfügung stehende Raum für den Einbau des Gerätes begrenzt ist.

Die Informationsplatten weisen üblicherweise in ihrer Mitte ein Positionierloch auf. Um die Plattenoberfläche zu schonen, ist es vorteilhaft, wenn die Informationsplatte von der Hand einer Bedienperson nur am Rand des Positionierloches und am äußeren Rand der Informationsplatte berührt wird.

Bei der bekannten Anordnung muß der Mittelpunkt der Informationsplatte von Hand mindestens bis auf die Höhe des Mittelpunktes des Transportrades in die nachfolgend als Zwischenstellung bezeichnete Position eingebracht werden, bevor der Lademechanismus den selbsttätigen Einzug der Informationsplatte übernimmt. Das Positionierloch ragt in dieser Zwischenstellung nicht mehr über die Front des Gehäuses nach außen, und die Bedienperson kann die Informationsplatte nicht in der gewünschten Weise am Rand des Positionierloches und am äußeren Rand der Informationsplatte fassen. Die Bedienperson wird damit gezwungen, für das Einbringen der Informationsplatte in die Zwischenstellung die Oberfläche der Informationsplatte zu berühren. Dies bedingt einen erhöhten Verschleiß der Informationsplatte.

Es ist Aufgabe der Erfindung, einen Lademechanismus der eingangs genannten Art zu realisieren, welcher möglichst geringe Abmessungen aufweist und welcher das Laden bzw. Entladen der Informationsplatte ermöglicht, ohne deren Oberfläche zu berühren.

Diese Aufgabe ist erfindungsgemäß dadurch gelöst, daß die Nut der ersten und die Nut der zweiten Führung jeweils wenigstens eine gegenüber der Ladeebene geneigte Andruckfläche aufweisen, daß die Nut der ersten und die Nut der zweiten Führung jeweils eine im wesentlichen senkrecht zu der Ladeebene verlaufende Innenkante aufweisen und daß die innere Nuthöhe jeweils kleiner als die Dicke der Informationsplatte gewählt ist, so daß während des Ladevorganges die Außenkante der Informationsplatte von den Innenkanten der Nuten nicht berührt wird.

Die bewegbare Lagerung der ersten und der zweiten Führung ermöglicht es, daß sich diese gemäß der äußeren Kontur der Informationsplatte bewegen und so den Plattenrand der Informationsplatte flexibel führen können. Dadurch wird der Einzug der Informationsplatte auf nahezu beliebig vorgebbaren Ladebahnen möglich. Es ist ebenfalls möglich, Informationsplatten, die keinen kreisförmigen Plattenrand aufweisen (z.B. mit ovalen oder andersartig ausgebildeten Plattenrändern) mittels eines derartigen Lademechanismus in das Gerät einzurollen. Für die bewegbare Lagerung der ersten und der zweiten Führung sind verschiedenartigste Lagerungen denkbar. So ist es z.B. möglich, daß die erste Führung und die zweite Führung in Führungsschlitzen geführt sind und in diesen Führungsschlitzen mittels Federkraft oder mittels Stellantrieben gegen den Plattenrand der Informationsplatte gedrückt werden. Ferner ist es möglich, daß die erste Führung und die zweite Führung an einseitig gelagerten Schwenkarmen angeordnet sind.

Die Nuten der ersten und der zweiten Führung sind im wesentlichen U-förmig ausgebildet, wobei wenigstens ein Schenkel gegenüber der Ladeebene geneigt ist und dadurch wenigstens eine geneigte Andruckfläche für die Informationsplatte erhält. Als Ladeebene wird die Ebene bezeichnet, in der die Informationsplatte mittels der ersten und der zweiten Führung in das Gerät eingerollt wird. Die erste und die zweite Führung werden während des Ladevorganges gegen den Rand der Informationsplatte gedrückt. Dabei wird mittels der geneigten Andruckflächen eine Kraft auf die Oberfläche der Informationsplatte ausgeübt, die senkrecht zu der Ladeebene gerichtet ist. Die innere Nuthöhe, d.h. die Höhe der Nut an der inneren Umfangsfläche der Nut, ist kleiner als die Dicke der Informationsplatte gewählt. Soll der Lademechanismus zum Be- und Entladen eines informationstechnischen Gerätes mit Informationsplatten verschiedener Dicken verwendet werden, so wird die innere Nuthöhe kleiner als die Höhe der dünnsten Informationsplatte gewählt. Dadurch wird erreicht, daß während des Ladevorganges die Außenkante der Informationsplatte die Innenkanten der Nuten nicht berührt. Die Informationsplatte berührt die Nuten lediglich im punktuell im Bereich der geneigten Andruckflächen.

Eine derartige, im wesentlichen U-förmig ausgebildete Nut hat gegenüber einer V-förmig ausgebildeten Nut den Vorteil, daß der Neigungswinkel der Andruckflächen wesentlich flacher gewählt werden kann. Dies hat einerseits den Vorteil, daß die Kraft, welche im Bereich der Andruckflächen in der Richtung senkrecht zu der Ladeebene auf die Oberfläche der Informationsplatte aufgebracht wird, sich deutlich erhöht. Zudem kann bei gleicher Dicke der Informationsplatte die U-förmig ausgebildete Nut mit einer deutlich geringeren Tiefe in Richtung der Ladeebene ausgebildet werden.

Eine weitere vorteilhafte Ausgestaltung der Erfindung ist dadurch gekennzeichnet, daß die Nut der ersten und die Nut der zweiten Führung jeweils an der Oberseite und der Unterseite der Nut eine gegenüber der Ladeebene geneigte Andruckfläche aufweisen.

Mit einer derartig ausgebildeten Nut kann auf die Oberfläche der Informationsplatte sowohl von oben mittels der Andruckfläche der Oberseite als auch von unten mittels der Andruckfläche der Unterseite eine Kraft in einer Richtung senkrecht zu der Ladeebene auf die Oberfläche der Informationsplatte aufgebracht werden.

Eine weitere vorteilhafte Ausgestaltung der Erfindung ist dadurch gekennzeichnet, daß die Informationsplatte während des Ladevorganges in den Nuten der ersten und der zweiten Führung klemmt.

Ein derartiges Klemmen kann mittels des erfindungsgemäßen Lademechanismus wegen der im wesentlichen U-förmig ausgebildeten Nut gut realisiert werden. Da der Neigungswinkel der Andruckflächen sehr flach gewählt werden kann, ist die Kraft, die im Bereich der Andruckflächen in der Richtung senkrecht zu der Ladeebene auf die Oberfläche der Informationsplatte aufgebracht werden kann, sehr groß, und es kann eine hohe Klemmwirkung erzielt werden.

Nach einer weiteren vorteilhaften Ausgestaltung der Erfindung ist vorgesehen, daß die Informationsplatte in einer Auswurfstellung in den Nuten der ersten und der zweiten Führung derart klemmt, daß sie von der Hand einer Bedienperson mit einer Mindestkraft von 0,7N aus den Nuten herausgezogen werden muß.

In der Auswurfstellung drücken die erste Führung und die zweite Führung mit ihren Andruckflächen gegen die Oberfläche der Informationsplatte und klemmen diese fest, so daß ein selbsttätiges Herausrollen der Informationsplatte aus dem Gerät verhindert wird. Um die Informationsplatte aus dem Gerät zu entnehmen, muß die Bedienperson die Informationsplatte mit einer Mindestkraft von 0,7N aus den Nuten der ersten Führung und der zweiten Führung herausziehen. Eine derartige Mindestkraft ist insbesondere dann von Vorteil, wenn der Lademechanismus in einem informationstechnischen Gerät eines Kraftfahrzeuges eingesetzt wird. Dann wird mit einer derartigen Mindestkraft gewährleistet, daß die Informationsplatte auch während der Fahrt bei Erschütterungen, z.B. infolge Fahrbahnunebenheiten, nicht selbsttätig aus dem Gerät herausfällt.

Eine weitere vorteilhafte Ausgestaltung der Erfindung ist dadurch gekennzeichnet, daß die erste Führung ein Stützsegment aufweist. Bei einer vorteilhaften Weiterbildung dieser Ausgestaltung ist vorgesehen, daß der Neigungswinkel der Andruckflächen der ersten Führung in einem Bereich zwischen 4° und 8° liegt und der Neigungswinkel der Andruckflächen der zweiten Führung in einem Bereich zwischen 3° und 7° liegt.

Derartig gewählte Neigungswinkel der Andruckflächen haben sich als besonders vorteilhaft herausgestellt. Wird der Neigungswinkel der Andruckflächen größer als 7° bzw. 8° gewählt, so ist die Normalkraft, welche im Bereich der Andruckflächen auf die Oberfläche der Informationsplatte aufgebracht werden kann, sehr klein. Wird der Neigungswinkel kleiner als 3° bzw. 4° gewählt, so wird der Lademechanismus bei einer vorgegebenen radialen Nuttiefe sehr empfindlich gegenüber Toleranzen der Dicke der Informationsplatte.

Der Neigungswinkel der Andruckflächen des Stützsegmentes wird vorteilhaft größer als der Neigungswinkel der Andruckflächen des Transportrades gewählt, da das Transportrad die Informationsplatte aktiv antreibt, während das Stützsegment der passiven Abstützung dient.

Eine weitere vorteilhafte Ausgestaltung der Erfindung ist dadurch gekennzeichnet, daß die erste Führung ein drehend antreibbares Transportrad aufweist.

Weist sowohl die erste Führung als auch die zweite Führung ein drehend antreibbares Transportrad auf, so wird es möglich, die Informationsplatte in das Gerät ein- bzw. auszufahren, ohne daß die Informationsplatte sich dabei selbst dreht. Sind die geometrischen Abmessungen der Nut des Transportrades der ersten Führung und der Nut des Transportrades der zweiten Führung genau gleich, so wird die Informationsplatte ohne Eigendrehung in das Gerät eingefahren bzw. aus dem Gerät ausgefahren, wenn sich das Transportrad der ersten Führung und das Transportrad der zweiten Führung mit gleicher Drehgeschwindigkeit entgegengesetzt drehen.

Eine weitere vorteilhafte Ausgestaltung der Erfindung ist dadurch gekennzeichnet, daß der Elastizitätsmodul der Oberflächen der Andruckflächen größer als der Elastizitätsmodul der Informationsplatte ist, daß die Oberflächen der Andruckflächen eine derartige Rauhigkeit aufweisen und die Informationsplatte mit einer derartigen Kraft gegen die Andruckflächen der Nut gedrückt werden, daß während des Ladevorganges im Bereich der Andruckflächen ein Reibschluß zwischen der Informationsplatte und den Andruckflächen besteht.

Die Oberfläche ist bei dieser vorteilhaften Ausgestaltung der Erfindung mit einer bestimmten Rauhigkeit versehen. Da das Elastizitätsmodul der Oberfläche der Andruckfläche größer als das Elastizitätsmodul der Informationsplatte ist, greift die Oberfläche der Informationsplatte teilweise in die rauhe Oberfläche der Andruckflächen ein, so daß ein Reibschluß zwischen der Oberfläche der Informationsplatte und den Andruckflächen besteht.

Eine weitere vorteilhafte Ausgestaltung der Erfindung ist dadurch gekennzeichnet. daß das Basismaterial des Transportrades Stahl ist und daß der Stahl wenigstens im Bereich der Andruckflächen jeweils mit einer Schicht aus Chrom-Karbid bedeckt ist.

Die Grundkontur des Transportrades kann z.B. aus einem Stahl gedreht werden. Dieses gedrehte Transportrad aus Stahl ist im Bereich der Andruckflächen jeweils mit einer Schicht aus Chrom-Karbid bedeckt. Chrom-Karbid hat eine sehr hohe Härte, die bei geeigneter Zusammensetzung Werte von mehr als 800 HV (HV= Vickers Härte) erreichen kann. Das Elastizitätsmodul von Chrom-Karbid ist sehr groß, und es lassen sich Werte von mehr als 300 Giga-Pascal erzielen. Zudem weist Chrom-Karbid eine sehr gute Adhäsion zu Polycarbonat auf, aus dem Informationsplatten, die nach dem Compact-Disc-Standard gefertigt sind, bestehen.

Infolge der großen Härte der Chrom-Karbid-Schicht tritt ein sehr geringer Verschleiß sowohl der Chrom-Karbid-Schicht als auch der Oberfläche der Informationsplatte auf. Infolge der guten Adhäsion zwischen Chrom-Karbid und Polycarbonat treten hohe Haftreibungskräfte zwischen der Oberfläche der Informationsplatte und den Andruckflächen aus Chrom-Karbid auf, so daß auf die Informationsplatte große Einzugskräfte und Haltekräfte in Richtung der Ladeebene aufgebracht werden können. Mittels des großen Elastizitätsmoduls der Chrom-Karbid-Schicht wird erreicht, daß die Oberfläche der Informationsplatte teilweise in die Oberfläche der Chrom-Karbid-Schicht eingreift, so daß ein Reibschluß entsteht.

Eine weitere vorteilhafte Ausgestaltung der Erfindung ist dadurch gekennzeichnet, daß das Basismaterial des Transportrades Stahl ist und daß der Stahl wenigstens im Bereich der Andruckflächen jeweils mit einer Schicht aus Wolfram-Carbon-Wasserstoff bedeckt ist.

Die Grundkontur des Transportrades kann z.B. aus einem Stahl gedreht werden. Dieses gedrehte Transportrad aus Stahl ist im Bereich der Andruckflächen jeweils mit einer Schicht aus Wolfram-Carbon-Wasserstoff bedeckt. Wolfram-Carbon-Wasserstoff hat eine sehr hohe Härte, die bei geeigneter Zusammensetzung Werte von mehr als 800 HV erreichen kann. Das Elastizitätsmodul von Wolfram-Carbon-Wasserstoff ist sehr groß, und es lassen sich Werte von mehr als 300 Giga-Pascal erzielen. Zudem weist Wolfram-Carbon-Wasserstoff eine sehr gute Adhäsion zu Polycarbonat auf, dem Material, aus dem Informationsplatten, die nach dem Compact-Disk-Standard gefertigt sind, bestehen.

Infolge der großen Härte der Wolfram-Carbon-Wasserstoff-Schicht tritt ein sehr geringer Verschleiß sowohl der Wolfram-Carbon-Wasserstoff-Schicht als auch der Oberfläche der Informationsplatte auf. Infolge der guten Adhäsion zwischen Wolfram-Carbon-Wasserstoff und Polycarbonat treten hohe Haftreibungskräfte zwischen der Oberfläche der Informationsplatte und den Andruckflächen aus Wolfram-Carbon-Wasserstoff auf, so daß auf die Informationsplatte große Einzugskräfte und Haltekräfte in Richtung der Ladeebene aufgebracht werden können. Mittels des großen Elastizitätsmoduls der Wolfram-Carbon-Wasserstoff-Schicht wird erreicht, daß die Oberfläche der Informationsplatte teilweise in die Oberfläche der Wolfram-Carbon-Wasserstoff-Schicht eingreift, so daß ein Reibschluß entsteht.

Eine weitere vorteilhafte Ausgestaltung der Erfindung ist dadurch gekennzeichnet, daß das Basismaterial der ersten Führung Stahl ist und daß der Stahl wenigstens im Bereich der Andruckflächen jeweils mit einer Schicht aus Chrom-Karbid oder Wolfram-Carbon-Wasserstoff bedeckt ist.

Mit einer derartigen Anordnung werden die vorteilhaften Eigenschaften der Chrom-Karbid- bzw. der Wolfram-Carbon-Wasserstoff-Schicht sowohl für die erste Führung als auch für die zweite Führung ausgenutzt.

Gemäß einer vorteilhaften Weiterbildung der Erfindung ist vorgesehen, daß die maximale Oberflächenrauhigkeit Rₜ der Andruckflächen in einem Bereich zwischen 2µm und 15µm liegt und daß die arithmetische Mittenrauheit Rₐ in einem Bereich zwischen 0,2µm und 1,5µm liegt.

Wird die arithmetische Mittenrauheit Rₐ größer als 1,5µm, so ist die Oberflächenrauhigkeit zu ungleichmäßig verteilt, und die Kraft, die mittels der Andruckflächen auf die Oberfläche der Informationsplatte aufgebracht wird, unterliegt örtlichen Schwankungen. Dies kann zu einem ungleichmäßigen Einrollen der Informationsplatte führen, insbesondere zu einem Stick-and-Slip-Verhalten. Wird die maximale Oberflächenrauhigkeit Rₜ der Andruckflächen größer als 15µm, so führt dies zu einem großen Verschleiß der Oberfläche der Informationsplatte, und es kommt zu einer Abrasion der Oberflächenschicht der Informationsplatte. Ist die maximale Oberflächenrauhigkeit Rₜ der Andruckflächen kleiner als 2µm, so wird die Haftreibung zwischen den Andruckflächen und der Oberfläche der Informationsplatte sehr gering, so daß die auf die Informationsplatte in der Ladeebene aufbringbare Kraft zu gering werden kann.

Die Chrom-Karbid-Schicht bzw. die Wolfram-Carbon-Wasserstoff-Schicht ist vorteilhaft mittels eines Aufdampfverfahrens aufgedampft. Ein derartiges Aufdampfverfahren hat den Vorteil, daß das Chrom-Karbid bzw. das Wolfram-Carbon-Wasserstoff sich der Oberflächenstruktur des Stahls anpaßt. Ist der Stahl im Bereich der Andruckflächen mit der gewünschten Oberflächenrauhigkeit versehen, so bleibt diese Oberflächenrauhigkeit durch Aufdampfen der Chrom-Karbid-Schicht bzw. der Wolfram-Carbon-Wasserstoff-Schicht erhalten. Als Aufdampfverfahren für die Chrom-Karbid-Schicht ist insbesondere ein CVD-Verfahren (Chemical Vapour Deposition) und als Aufdampfverfahren für die Wolfram-Carbon-Wasserstoff-Schicht ein PVD-Verfahren (Physical Vapour Deposition) geeignet.

Der erfindungsgemäße Lademechanismus kann vorzugsweise in einem Laufwerk, in einem informationstechnischen Gerät mit einem Laufwerk oder in einem Autoradio mit einem Laufwerk eingesetzt werden.

Einige Ausführungsbeispiele der Erfindung werden nachfolgend anhand der Zeichnung in den Figuren 1 bis 8 näher erläutert. Es zeigen:
Fig. 1 ein erstes Ausführungsbeispiel des Lademechanismus zum Be- und Entladen eines informationstechnischen Gerätes mit einer Informationsplatte in Draufsicht, wobei der Lademechanismus als erste Führung ein eine Nut aufweisendes Stützsegment und als zweite Führung ein eine Nut aufweisendes Transportrad für die Ränder der Informationsplatte aufweist und er sich in einer Auswurfstellung befindet, in der die Informationsplatte in die Nuten eingeklemmt und von den Führungen stabil gehalten wird, so daß sie von der Hand einer Bedienperson entnommen werden kann.
Fig. 2 den Lademechanismus nach Fig. 1 in einer Zwischenstellung, bei der die Informationsplatte von der Bedienperson bis zu dem Punkt eingeschoben ist, bei dem der Lademechanismus den weiteren Ladevorgang der Informationsplatte selbsttätig übernimmt,
Fig. 3 den Lademechanismus nach Fig. 1 in einer Einrollstellung mit einer in einer ersten Laderichtung vollständig eingerollten Informationsplatte,
Fig. 4 eine Schnittdarstellung eines Transportrades der zweiten Führung, wobei das Basismaterial des Transportrades Stahl ist,
Fig. 5 eine Schnittdarstellung des Transportrades der zweiten Führung, wobei das Basismaterial des Transportrades Stahl ist und der Stahl im Bereich der Nut von einer Chrom-Karbid-Schicht bedeckt ist,
Fig 6 eine Schnittdarstellung des Stützsegmentes der ersten Führung, wobei das Basismaterial des Stützsegmentes Stahl ist und der Stahl im Bereich der Nut von einer Chrom-Karbid-Schicht bedeckt ist,
Fig 7 eine prinzipielle Darstellung des Zusammenspiels des Stützsegmentes der ersten Führung und des Transportrades der zweiten Führung während des Ladevorganges mit der Informationsplatte, die in die Nuten des Transportrades und des Stützsegmentes eingeklemmt ist, die die Innenkanten der Nuten jedoch nicht berührt.
Fig. 8 ein zweites Ausführungsbeispiel des Lademechanismus in Draufsicht, wobei sowohl die erste Führung als auch die zweite Führung ein mit Nuten versehenes Transportrad aufweisen und der Lademechanismus sich in einer Auswurfstellung befindet, in der die Informationsplatte in die Nuten eingeklemmt und von den Führungen stabil gehalten wird, so daß sie von der Hand einer Bedienperson entnommen werden kann.

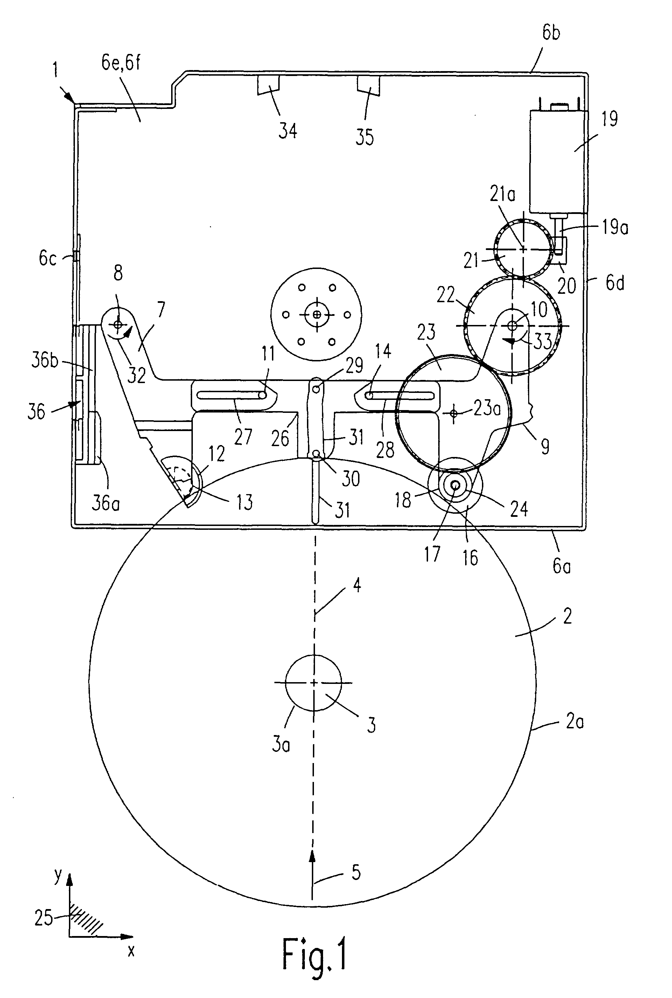

Fig. 1 zeigt ein erstes Ausführungsbeispiel eines erfindungsgemäßen Lademechanismus in der Auswurfstellung. Der in Fig. 1 dargestellte Lademechanismus ist in einem Gehäuse 1 angeordnet. Der Lademechanismus dient dem Einfahren einer Informationsplatte 2 auf einer geradlinigen Ladebahn 4 in einer ersten Laderichtung 5 in das Gehäuse 1 bzw. dem Ausfahren der Informationsplatte 2 auf der geradlinigen Ladebahn 4 entgegen der ersten Laderichtung 5. Die Informationsplatte 2 hat einen kreisrunden Rand 2a und weist ein kreisrundes Positionierloch 3 mit einem Rand 3a auf. Das Gehäuse 1 weist eine Vorderwand 6a, eine Rückwand 6b, Seitenwände 6c und 6d sowie eine Bodenplatte 6e und einen Gehäusedeckel 6f auf. Auf der Bodenplatte 6e ist in Nähe der Seitenwand 6c ein erster Schwenkarm 7 um eine Schwenkachse 8 verschwenkbar angelagert. An der Bodenplatte 6e ist in Nähe der Seitenwand 6d ein zweiter Schwenkarm 9 um eine Achse 10 verschwenkbar angelagert. An dem ersten Schwenkarm 7 ist ein Schwenkarmstift 11 sowie als erste Führung ein eine Nut 13 aufweisendes Stützsegment 12 befestigt. An dem zweiten Schwenkarm 9 ist ein Schwenkarmstift 14 befestigt. An dem zweiten Schwenkarm 9 ist ein Transportrad 16 drehbar um eine Drehachse 17 angeordnet. Das Transportrad 16 weist eine Nut 18 auf. Auf der Bodenplatte 6e des Gehäuses 1 ist ein Motor 19 befestigt, dessen Welle 19a eine Schnecke 20 trägt. Der Motor 19 ist in zwei Richtungen antreibbar. Mittels der Schnecke 20 ist ein Zahnrad 21 antreibbar, das um eine an der Bodenplatte 6e angeordnete Achse 21a drehbar gelagert ist. Das Zahnrad 21 kämmt mit einem Zahnrad 22, das um die Schwenkachse 10 des zweiten Schwenkarmes 9 drehbar gelagert ist. Das zweite Zahnrad 22 kämmt mit einem dritten Zahnrad 23, das um eine Achse 23a drehbar an dem zweiten Schwenkarm 9 angelagert ist. Das dritte Zahnrad 23 kämmt mit einem an dem Transportrad 16 angeordneten Zahnkranz 24. Somit ist das Transportrad 16 mittels des Motors 19, der Motorwelle 19a, der Schnecke 20, des ersten Zahnrades 21, des zweiten Zahnrades 22 und der dritten Zahnrades 23 in zwei Richtungen antreibbar.

Es ist eine T-förmig ausgebildete Koppelstange 26 vorgesehen, welche eine senkrecht zu der ersten Laderichtung 5 verlaufende erste Koppelstangennut 27, eine senkrecht zu der ersten Laderichtung 5 verlaufende zweite Koppelstangennut 28 sowie einen ersten Koppelstangenstift 29 und einen zweiten Koppelstangenstift 30 aufweist. Der erste Koppelstangenstift 29 und der zweite Koppelstangenstift 30 greifen in eine sich in der ersten Laderichtung 5 erstreckende Gehäusedeckelnut 31 des Gehäusedeckels 6f ein. In die erste Koppelstangennut 27 greift der Schwenkarmstift 11 des ersten Schwenkarmes 7, und in die zweite Koppelstangennut 28 greift der Schwenkarmstift 14 des zweiten Schwenkarmes 9 ein.

Der erste Schwenkarm 7 ist mittels einer nicht dargestellten Feder in Richtung des Pfeiles 32 um die Schwenkachse 8 vorgespannt. Der zweite Schwenkarm 9 ist in Richtung des Pfeiles 33 um die Schwenkachse 10 mittels einer nicht dargestellten Feder vorgespannt. Es ist auch möglich, daß nur einer der beiden Schwenkarme vorgespannt ist.

An der hinteren Wand 6b des Gehäuses 1 sind zwei Anschläge 34 und 35 angeordnet.

An der Seitenwand 6c des Gehäuses 1 ist eine Hilfsführung 36 angeordnet. Diese Hilfsführung 36 weist eine sich in einer Ladeebene 25 erstreckende untere Auflagefläche 36a sowie eine sich in der Ladeebene 25 erstreckende obere Führungsfläche 36b auf. Die Ladeebene 25 ist die Ebene, in der die Informationsplatte 2 in der ersten Laderichtung 1 in das Gerät eingefahren wird und ist in der Fig. 1 durch das Koordinatenkreuz X-Y definiert. Die obere Führungsfläche 36b ist in der ersten Laderichtung 5 länger ausgebildet als die untere Auflagefläche 36a.

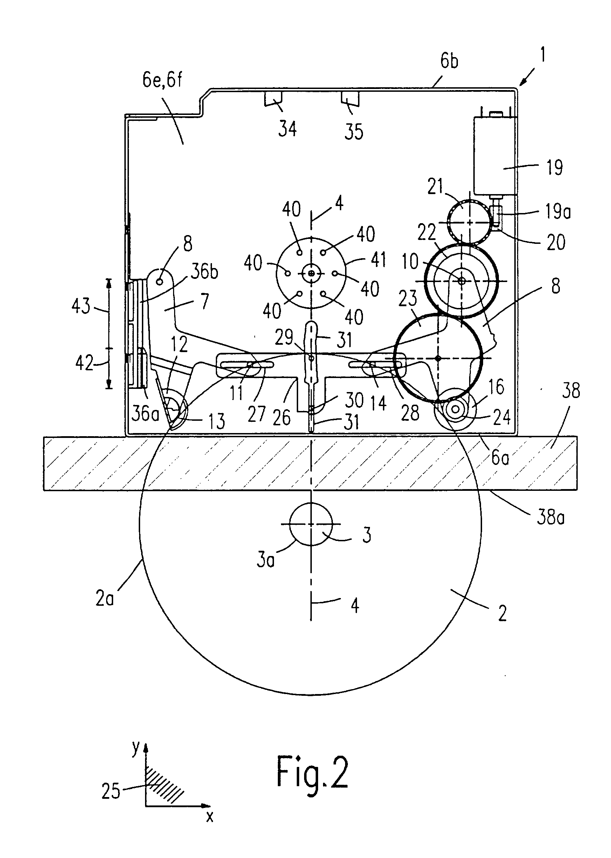

In der in Fig. 1 gezeigten Auswurfstellung ist die Informationsplatte 2 von der Hand der Bedienperson mit der Nut 13 des Stützsegmentes 12 und der Nut 18 des Transportrades 16 in Eingriff gebracht worden. Hierzu faßt die Bedienperson die Informationsplatte 2 am Rand 2a der Informationsplatte 2 sowie am Rand 3a des Positionierloches 3. So gehalten wird die Informationsplatte 2 von der in Fig. 1 dargestellten Auswurfstellung in die in Fig. 2 dargestellte Zwischenstellung überführt. Bei diesem Überführen von der in Fig. 1 dargestellten Auswurfstellung in die in Fig. 2 dargestellte Zwischenstellung wird der erste Schwenkarm 7 um die Schwenkachse 8 und der zweite Schwenkarm 9 um die Schwenkachse 10 verschwenkt. Die hierzu erforderliche Verschwenkkraft wird von der Bedienperson aufgebracht. Die Informationsplatte 2 wird dabei seitlich auf der einen Seite von der Nut 13 des Stützsegmentes 12 und auf der anderen Seite von der Nut 18 des Transportrades 16 geführt. Die Oberfläche der Informationsplatte 2 wird von der Hand der Bedienperson nicht berührt.

In der in der Fig. 2 dargestellten Zwischenstellung des Lademechanismus ragen ca. 2/3 des Durchmessers der Informationsplatte 2 über die Vorderseite 6a des Gehäuses 1 des Lademechanismus hinaus nach außen. Wie in Fig. 2 erkennbar, ist es möglich, an der Vorderwand 6a des Gehäuses 1 eine Bedienfront 38 anzuordnen. Diese Bedienfront 38 könnte z.B. die Bedienfront eines Autoradios sein, in das ein Gerät zum Aufnehmen und/oder Wiedergeben von auf der Informationsplatte 2 gespeicherten Informationen integriert ist. Das Positionierloch 3 der Informationsplatte 2 ragt über die Vorderseite 38a der Bedienfront 38 hinaus nach außen. Die Informationsplatte 2 kann daher auch in dieser Zwischenstellung am Rand 3a des Positionierloches 3 und am Rand 2a der Informationsplatte 2 von der Hand der Bedienperson gefaßt werden.

Ist die Informationsplatte 2 bis in diese Zwischenstellung von der Hand der Bedienperson in das Gehäuse 1 eingebracht worden, so wird der Motor 19 über einen nicht dargestellten Schalter angesteuert, und der Lademechanismus führt den weiteren Ladevorgang selbsttätig durch.

Als Schalter ist z.B. ein mechanischer Schalter oder ein optischer Schalter (Lichtschranke) einsetzbar. Es ist auch möglich, daß der Motor bereits früher eingeschaltet wird.

Der Motor 19 beginnt sich nun derart zu drehen, daß er mittels der Motorwelle 19a, der Schnecke 20, des ersten Zahnrades 21, des zweiten Zahnrades 22 und des dritten Zahnrades 23 das Transportrad 16 im Uhrzeigersinn antreibt. Das im Uhrzeigersinn drehende Transportrad 16 übt dabei auf den Rand 2a der Informationsplatte 2 eine tangentiale Kraft aus, infolge derer die Informationsplatte 52 unter Abstützung zwischen dem Stützsegment 12 und dem Transportrad 16 selbsttätig auf der geradlinigen Ladebahn 4 in das Gehäuse 1 eingerollt wird. Dabei wird der erste Schwenkarm 7 um die Schwenkachse 8 und der zweite Schwenkarm 9 um die Schwenkachse 10 schwenkt.

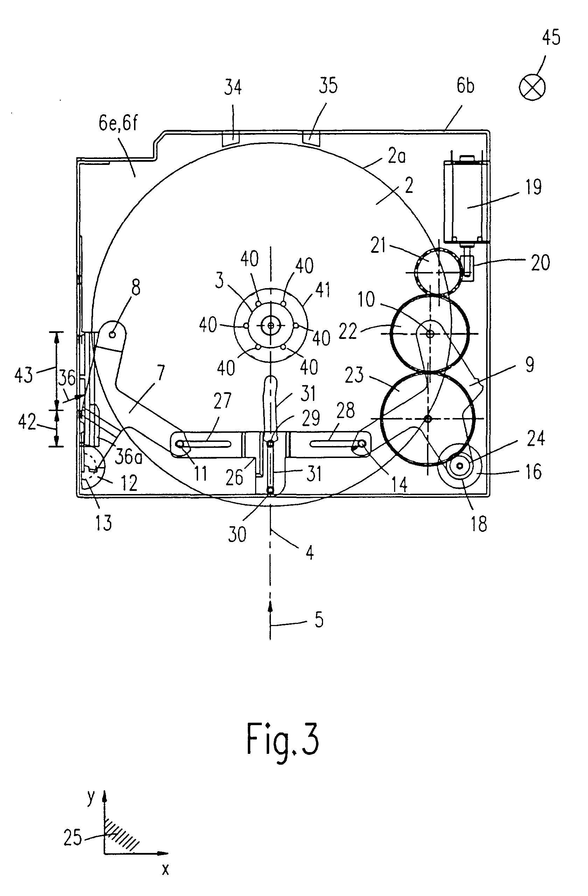

In Fig. 3 befindet sich der Lademechanismus in einer Einrollstellung, in der die Informationsplatte 2 in der ersten Laderichtung 5 bis gegen die Anschläge 34 und 85 eingerollt worden ist. Die Schwenkarme 7 und 9 sind mit dem Transportrad 16 und dem Stützelement 12 vom Plattenrand 2a weggeschwenkt und die untere Auflagefläche 36a der Hilfsführung 36 wirkt nicht mehr auf die Informationsplatte 2 ein, so daß diese mittels eines nicht dargestellten Absenkmechanismus mit ihrem Positionierloch 3 auf eine Klemmvorrichtung 40 eines angedeuteten Plattentellers 41 in eine nicht näher dargestellte Spielstellung abgesenkt werden kann. In dieser nicht näher dargestellten Spielstellung kann die Informationsplatte 2 mittels des Plattentellers 41, der von einer nicht dargestellten Antriebsvorrichtung antreibbar ist, gedreht werden, und die auf der Informationsplatte 2 gespeicherten Informationen, z.B. Musikinformationen, können wiedergegeben werden.

Nachfolgend wird der Übergang von der in Fig. 2 dargestellten Zwischenstellung in die in Fig. 3 dargestellte Einrollstellung näher beschrieben:

Das im Uhrzeigersinn drehende Transportrad 16 übt auf den Rand 2a der Informationsplatte 2 eine tangentiale Kraft auf, infolge derer die Informationsplatte 2 unter Abstützung zwischen dem Stützsegment 12 und dem Transportrad 16 auf der geradlinigen Ladebahn 4 in der ersten Laderichtung 5 in das Gehäuse 1 eingerollt wird. Bei dem Übergang von der Zwischenstellung in die Spielstellung wird der Rand 2a der Informationsplatte 2 teilweise von der Hilfsführung 36 geführt, die als dritte Führung zusätzlich zu dem als erste Führung fungierenden Stützsegment 12 und dem als zweite Führung fungierenden Transportrad 16 eine bessere Führung der Informationsplatte 2 gewährleistet. Dabei wird der Rand der Informationsplatte 2 in einem in den Fig. 2 und 3 gekennzeichnetem ersten Abschnitt 42 der Hilfsführung 36 sowohl von der unteren Auflagefläche 36a der Hilfsführung 36 als auch von der oberen Führungsfläche 36b der Hilfsführung 36 geführt. In einem zweiten Abschnitt 43 der Hilfsführung 36 wird die Informationsplatte 2 nur von der oberen Führungsfläche 36b der Hilfsführung 36 geführt. Bei dem Einrollen der Informationsplatte 2 in der ersten Laderichtung 5 wird das Einrollen auf der geradlinigen Ladebahn 4 dadurch gewährleistet, daß der erste Koppelstangenstift 29 und der zweite Koppelstangenstift 30 in der Gehäusedeckelnut 31 in der ersten Laderichtung 5 geführt werden. Der Ladevorgang in der ersten Laderichtung 5 wird dadurch beendet, daß die Informationsplatte 2 gegen die an der Rückwand 6b des Gehäuses 1 angeordneten Anschläge 34 und 35 gedrückt wird. Ist die Informationsplatte 2 in der ersten Laderichtung 5 bis gegen die Anschläge 34 und 35 eingerollt worden, so wird auf nicht näher dargestellte Weise ein nicht näher dargestellter Antriebsmechanismus eingeschaltet, der auf den ersten Schwenkarm 7 derart einwirkt, daß dieser sich im Uhrzeigersinn um die Schwenkachse 8 verschwenkt, und der auf den zweiten Schwenkarm 9 derart einwirkt, daß dieser sich um die Schwenkachse 10 entgegen dem Uhrzeigersinn verschwenkt. Dadurch wird die Nut 18 des Transportrades 16 und die Nut 13 des Stützsegmentes 12 außer Eingriff mit dem Rand 2a der Informationsplatte 2 gebracht. In dieser Position wird die Informationsplatte 2 auch von der unteren Auflagefläche 86a der Hilfsführung 36 nicht mehr geführt. Dadurch wird es möglich, daß die Informationsplatte 2 auf nicht näher dargestellte Weise von einem nicht näher dargestellten Absenkmechanismus in einer zweiten Laderichtung 45, die senkrecht zu der Ladeebene 25 verläuft, auf die Klemmvorrichtung 40 des Plattentellers 41 abgesenkt wird. Der Entladevorgang läuft genau umgekehrt zu dem Ladevorgang ab.

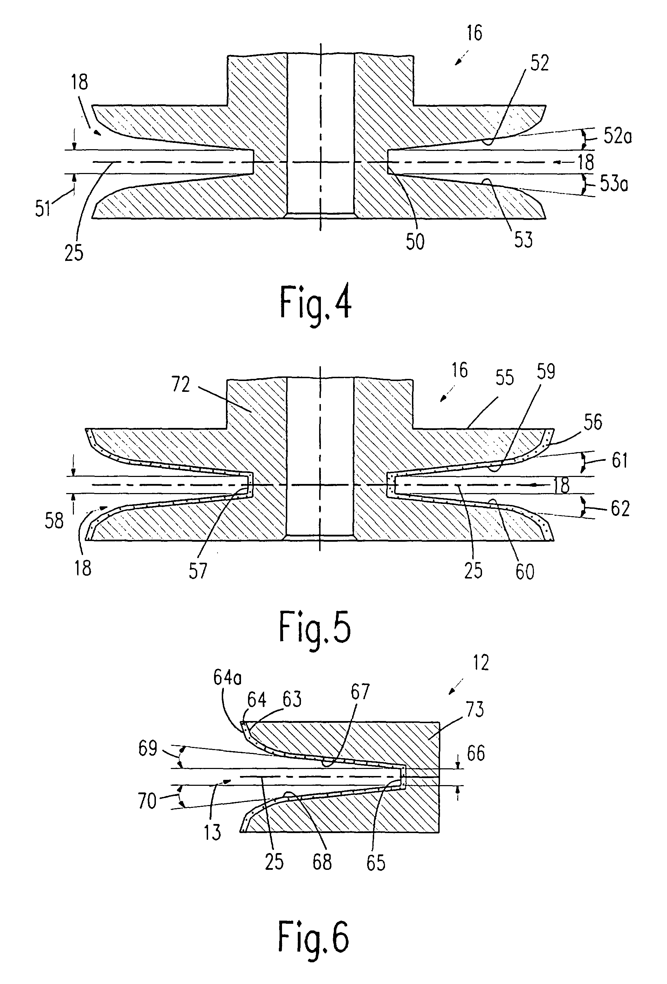

Fig. 4 zeigt eine Schnittdarstellung einer ersten Ausführungsform des Transportrades 16. Das Transportrad 16 ist aus Stahl ausgebildet und weist die die umlaufende Nut 18 auf. Die umlaufende Nut 18 weist eine Innenkante 50 auf. An der Innenkante 50 weist die Nut 18 eine innere Nuthöhe 51 auf. Die umlaufende Nut 18 weist an der Oberseite eine Andruckfläche 52 und an der Unterseite eine Andruckfläche 53 auf. Die Andruckfläche 52 ist gegenüber der Ladeebene 25 um den Neigungswinkel 52a und die Andruckfläche 53 ist gegenüber der Ladeebene 25 um den Neigungswinkel 53a geneigt. Die Nut 18 des Transportrades 16 ist mittels der geneigten Andruckflächen 52 und 53 und der Innenkante 50 im wesentlichen U-förmig ausgebildet.

Fig. 5 zeigt eine Schnittdarstellung einer zweiten Ausführungsform des Transportrades 16. Das Transportrad 16 weist ein Basiselement 72 aus Stahl auf. Die Grundkontur 55 des Basiselementes 72 kann aus einem Rohstahl z.B. mittels Drehen hergestellt werden. Im Bereich der Nut 18 ist die aus Stahl bestehende Grundkontur 55 des Basiselementes 72 mit einer Schicht 56 aus Chrom-Karbid bedeckt. Die Chrom-Karbid-Schicht 56 kann z.B. mittels eines Aufdampfverfahrens aufgedampft werden. Ein mögliches Aufdampfverfahren ist das CVD-Verfahren (Chemical Vapour Deposition). Die aufgedampfte Chrom-Karbid-Schicht 56 verläuft parallel zu der Grundkontur 55. Die umlaufende Nut 18 weist eine Innenkante 57 mit einer inneren Nuthöhe 58 auf. Die umlaufende Nut 18 weist an der Oberseite eine schräge Andruckfläche 59 und an der Unterseite eine schräge Andruckfläche 60 auf. Die schräge Andruckfläche 59 ist gegenüber der Ladeebene 25 um einen Neigungswinkel 61 und die schräge Andruckfläche 60 ist gegenüber der Ladeebene 25 um einen Neigungswinkel 62 geneigt.

Als Alternative zu der aufgedampften Chrom-Karbid-Schicht 56 ist eine Wolfram-Carbon-Wasserstoff-Schicht verwendbar.

Fig. 6 zeigt eine Schnittdarstellung des Stützsegmentes 12. Das Stützsegment 12 weist ein Basiselement 73 aus Stahl mit einer Grundkontur 63 auf. Diese Grundkontur 63 ist im Bereich der Nut 13 mit einer Schicht 64 aus Chrom-Karbid bedeckt. Die Nut 13 des Stützsegmentes 12 weist eine Innenkante 65 mit einer inneren Nuthöhe 66 auf. Die Chrom-Karbid-Schicht 64 ist mittels eines Aufdampfverfahrens aufgebracht worden, und die Oberfläche 64a der Chrom-Karbid-Schicht 64 verläuft parallel zu der Grundkontur 63 des Stahls. Die Nut 13 weist an ihrer Oberseite eine schräge Andruckfläche 67 und an ihrer Unterseite eine schräge Andruckfläche 68 auf. Die schräge Andruckfläche 67 ist gegenüber der Ladeebene 25 um einen Neigungswinkel 69 geneigt, und die schräge Andruckfläche 68 ist gegenüber der Ladeebene 25 um einen Neigungswinkel 70 geneigt.

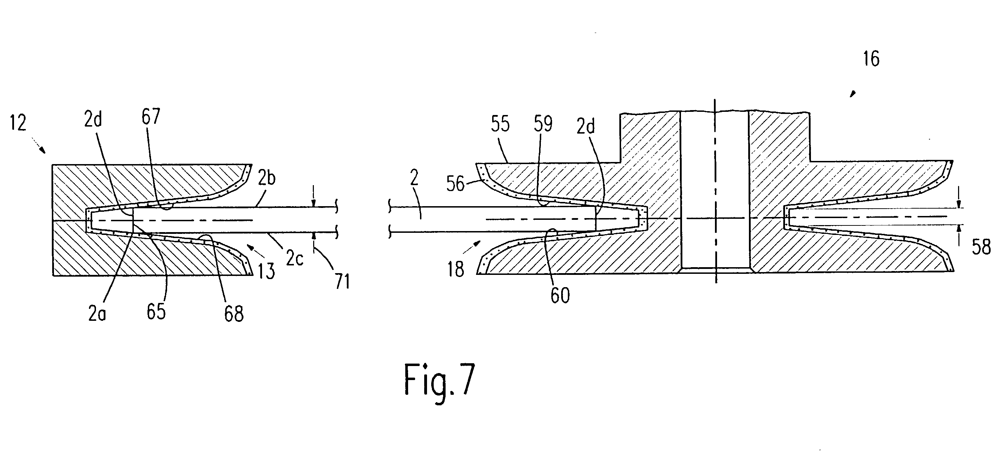

Fig. 7 zeigt eine prinzipielle Darstellung des Zusammenspiels zwischen dem in der Fig. 5 dargestellten Transportrad 16, dem in der Fig. 6 dargestellten Stützsegment 12 und der Informationsplatte 2. Die Informationsplatte 2 besteht aus Polycarbonat und weist eine erste Oberflächenseite 2b, eine zweite Oberflächenseite 2c und eine Außenkante 2d auf. Während des Ladevorganges wird die Informationsplatte 2 in der Nut 18 des Transportrades 16 und der Nut 13 des Stützsegmentes 12 festgeklemmt. Die erste Oberflächenseite 2b der Informationsplatte 2 drückt gegen die Andruckfläche 59 des Transportrades 16 und gegen die Andruckfläche 67 des Stützsegmentes 12. Die zweite Oberflächenseite 2c der Informationsplatte 2 drückt gegen die Andruckfläche 60 des Transportrades 16 und gegen die Andruckfläche 68 des Stützsegmentes 12. Infolge der schrägen Ausbildung der Andruckflächen 59 und 60 des Transportrades 16 sowie der Andruckflächen 67 und 68 des Stützsegmentes 12 berühren sich die Oberflächen 2b bzw. 2c der Informationsplatte 2 und die Andruckflächen 59 und 67 bzw. 60 und 68 im wesentlichen punktuell im Bereich des Plattenrandes 2a. Im Bereich des Plattenrandes 2a sind üblicherweise keine Informationen auf der Informationsplatte abgespeichert. Der Bereich der Informationsplatte 2, in dem Informationen abgespeichert sind, wird weder von der Nut 18 des Transportrades 16 noch von der Nut 13 des Stützsegmentes 12 berührt, und etwaige Beschädigungen von Oberflächenbereichen der Informationsplatte 2, auf denen Informationen gespeichert sind, werden vermieden. Die Außenkante 2d der Informationsplatte 2 wird während des Ladevorganges weder von der Innenkante 57 des Transportrades 16 noch von der Innenkante 65 des Stützsegmentes 12 berührt. Die innere Nuthöhe 58 des Transportrades 16 und die innere Nuthöhe 66 des Stützsegmentes 12 sind jeweils kleiner gewählt als die Dicke 71 der Informationsplatte 2.

Die Neigungswinkel 61 bzw. 62 der Andruckflächen 59 bzw. 60 des Transportrades 16 liegen in einem Bereich zwischen 3° und 7°. Die Neigungswinkel 69 bzw. 70 der Andruckflächen 67 bzw. 68 des Stützsegmentes 12 liegen in einem Bereich zwischen 4° und 8°. Infolge dieser geringen Neigungswinkel können mittels der Andruckflächen 59 und 60 bzw. 67 und 68 senkrecht zu der Ladeebene 25 hohe Normalkräfte auf die Oberflächen 2b bzw. 2c der Informationsplatte 2 aufgebracht werden. Dadurch wird eine hohe Klemmwirkung erzielt.

Chrom-Karbid hat eine sehr hohe Härte, die Werte von mehr als 800HV (HV= Vickers-Härte) erreichen kann. Der Elastizitätsmodul von Chrom-Karbid ist sehr groß, und es lassen sich Werte von mehr als 300 Giga-Pascal erzielen. Infolge der großen Härte der Chrom-Karbid-Schicht 56 des Transportrades 16 bzw. der Chrom-Karbid-Schicht 64 des Stützsegmentes 12 tritt ein sehr geringer Verschleiß sowohl der Chrom-Karbid-Schichten 56 und 64 als auch der Oberflächen 2b und 2c der Informationsplatte 2 auf. Da Chrom-Karbid eine gute Adhäsion zu Polycarbonat aufweist, treten hohe Haftreibungskräfte zwischen den Oberflächen 2b bzw. 2c der Informationsplatte 2 und den Andruckflächen 59 und 60 bzw. 67 und 68 auf. Der Elastizitätsmodul der Chrom-Karbid-Schichten 56 und 64 ist deutlich größer als der Elastizitätsmodul der Informationsplatte 2 aus Polycarbonat. Dadurch wird erreicht, daß die Oberflächen 2b bzw. 2c der Informationsplatte 2 im Bereich des Plattenrandes 2a teilweise in die Andruckflächen 59 und 60 bzw. 67 und 68 eingreifen, so daß ein Reibschluß zwischen der Informationsplatte 2 und den Chrom-Karbid-Schichten 56 und 64 entsteht. Die maximale Oberflächenrauhigkeit Rₜ der Andruckflächen 59 und 60 bzw. 67 und 68 liegt in einem Bereich zwischen 2µm und 15µm und die arithmetische Mittelrauheit Rₐ in einem Bereich zwischen 0,2µm und 1,5µm.

Infolge der schrägen Andruckflächen 59 und 60 bzw. 67 und 68 kann der Lademechanismus auch Informationsplatten 2, die verschiedene Dicken 71 aufweisen, laden.

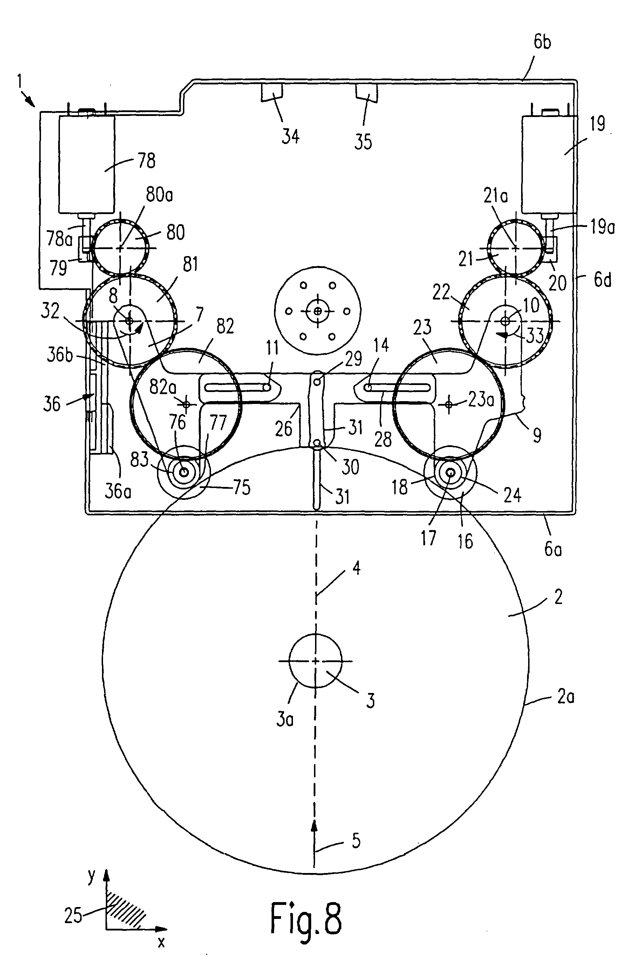

Fig. 8 zeigt ein zweites Ausführungsbeispiel des Lademechanismus in der Auswurfstellung. Dieses zweite Ausführungsbeispiel ist bis auf die Ausgestaltung der ersten Führung im wesentlichen mit dem ersten Ausführungsbeispiel identisch.

An dem ersten Schwenkarm 7 ist als erste Führung ein Transportrad 75 drehbar um eine Drehachse 76 angeordnet. Das Transportrad 75 weist eine Nut 77 auf. Auf der Bodenplatte 6e des Gehäuses 1 ist ein Motor 78 befestigt, dessen Welle 78a eine Schnecke 79 trägt. Der Motor 78 ist in zwei Richtungen antreibbar. Mittels der Schnecke 79 ist ein Zahnrad 80 antreibbar, das um eine an der Bodenplatte 6e angeordnete Achse 80a drehbar gelagert ist. Das Zahnrad 80 kämmt mit einem Zahnrad 81, das um die Schwenkachse 8 des ersten Schwenkarmes 7 drehbar gelagert ist. Das Zahnrad 81 kämmt mit einem Zahnrad 82, das um eine Achse 82a drehbar an dem ersten Schwenkarm 7 angelagert ist. Das Zahnrad 82 kämmt mit einem an dem Transportrad 75 angeordneten Zahnkranz 83. Somit ist das Transportrad 75 mittels des Motors 78, der Motorwelle 78a, der Schnecke 79, des Zahnrades 80, des Zahnrades 81 und des Zahnrades 82 in zwei Richtungen antreibbar.

Die geometrischen Abmessungen der Nut 77 des Transportrades 75 der ersten Führung und der Nut 18 des Transportrades 16 der zweiten Führung sind genau gleich. Das Transportrad 75 der ersten Führung und das Transportrad 16 der zweiten Führung werden mit gleicher Drehgeschwindigkeit in entgegengesetzter Richtung angetrieben, so daß die Informationsplatte 2 ohne Eigendrehung in das Gerät eingefahren bzw. aus dem Gerät ausgefahren wird.

Der Ladevorgang von der Auswurfstellung in die Zwischenstellung und die Einrollstellung erfolgt analog zu dem ersten Ausführungsbeispiel.

## Patentansprüche

1. Lademechanismus zum Be- und Entladen eines informationstechnischen Gerätes mit einer Informationsplatte (2), wobei für den Plattenrand (2a) eine erste (12) und eine zweite (16) jeweils eine Nut (13, 18) aufweisende Führung vorgesehen sind, wobei die zweite Führung ein drehend antreibbares Transportrad (16) aufweist, das die Informationsplatte (2) zum Laden in einer Ladeebene (25) in das Gerät hineinrollt bzw. zum Entladen aus diesem herausrollt, und die erste (12) und die zweite Führung (16) bewegbar gelagert sind,
**dadurch gekennzeichnet,**
**daß** die Nut (13) der ersten und die Nut (18) der zweiten Führung jeweils wenigstens eine gegenüber der Ladeebene (25) geneigte Andruckfläche (52, 53; 59, 60; 67, 68) aufweisen, daß die Nut (13) der ersten und die Nut (18) der zweiten Führung jeweils eine im wesentlichen senkrecht zu der Ladeebene (25) verlaufende Innenkante (50, 57, 65) aufweisen und daß die innere Nuthöhe (51, 58, 66) jeweils kleiner als die Dicke (71) der Informationsplatte (2) gewählt ist, so daß während des Ladevorganges die Außenkante (2d) der Informationsplatte (2) von den Innenkanten (50, 57, 65) der Nuten (13, 18) nicht berührt wird.

2. Lademechanismus nach Anspruch 1, **dadurch gekennzeichnet,**
**daß** die Nut (13) der ersten und die Nut (18) der zweiten Führung jeweils an der Oberseite und der Unterseite der Nut (13; 18) eine gegenüber der Ladeebene geneigte Andruckfläche (52, 53; 59, 60; 67, 68) aufweisen.

3. Lademechanismus nach einem der Ansprüche 1 oder 2, **dadurch gekennzeichnet, daß** die Informationsplatte (2) während des Ladevorganges in den Nuten (13; 18) der ersten (12) und der zweiten Führung (16) klemmt.

4. Lademechanismus nach Anspruch 3, **dadurch gekennzeichnet, daß** die Informationsplatte (2) in einer Auswurfstellung in den Nuten (13; 18) der ersten (12) und der zweiten Führung (16) derart klemmt, daß sie von der Hand einer Bedienperson mit einer Mindestkraft von 0,7 N aus den Nuten (13; 18) herausgezogen werden muß.

5. Lademechanismus nach einem der Ansprüche 2 bis 4, **dadurch gekennzeichnet, daß** der Neigungswinkel der Andruckflächen (69, 70) der ersten Führung (12) in einem Bereich zwischen 4° und 8° liegt und der Neigungswinkel (52a, 53a; 61, 62) der Andruckflächen der zweiten Führung (18) in einem Bereich zwischen 3° und 7° liegt.

6. Lademechanismus nach einem der Ansprüche 1 bis 5, **dadurch gekennzeichnet, daß** die erste Führung ein Stützsegment (12) aufweist.

7. Lademechanismus nach einem der Ansprüche 1 bis 5, **dadurch gekennzeichnet, daß** die erste Führung ein drehend antreibbares Transportrad (75) aufweist.

8. Lademechanismus nach einem der Ansprüche 1 bis 7, **dadurch gekennzeichnet, daß** der Elastizitätsmodul der Oberflächen der Andruckflächen (52, 53; 59, 60; 67; 68) größer als der Elastizitätsmodul der Informationsplatte (2) ist, daß die Oberflächen der Andruckflächen (52, 53; 59, 60; 67; 68) eine derartige Rauhigkeit aufweisen und die Informationsplatte (2) mit einer derartigen Kraft gegen die Andruckflächen (52, 53; 59, 60; 67; 68) der Nut gedrückt werden, daß während des Ladevorganges im Bereich der Andruckflächen (52, 53; 59, 60; 67; 68) ein Reibschluß zwischen der Informationsplatte (2) und den Andruckflächen (52, 53; 59, 60; 67; 68) besteht.

9. Lademechanismus nach einem der Ansprüche 1 bis 8, **dadurch gekennzeichnet, daß** das Basismaterial des Transportrades (18) Stahl ist und daß der Stahl wenigstens im Bereich der Andruckflächen (59, 60) jeweils mit einer Schicht (56) aus Chrom-Karbid bedeckt ist.

10. Lademechanismus nach einem der Ansprüche 1 bis 8, **dadurch gekennzeichnet, daß** das Basismaterial des Transportrades (18) Stahl ist und daß der Stahl wenigstens im Bereich der Andruckflächen (59, 60) jeweils mit einer Schicht aus Wolfram-Carbon-Wasserstoff (56) bedeckt ist.

11. Lademechanismus nach einem der Ansprüche 1 bis 10, **dadurch gekennzeichnet, daß** das Basismaterial der ersten Führung (12) Stahl ist und daß der Stahl wenigstens im Bereich der Andruckflächen (67; 68) jeweils mit einer Schicht (64) aus Chrom-Karbid oder Wolfram-Carbon-Wasserstoff bedeckt ist.

12. Lademechanismus nach einem der Ansprüche 1 bis 11, **dadurch gekennzeichnet, daß** die maximale Oberflächenrauhigkeit Rₜ der Andruckflächen (52, 53; 59, 60; 67; 68) in einem Bereich zwischen 2 µm und 15 µm liegt und daß die arithmetische Mittenrauheit Rₐ in einem Bereich zwischen 0,2 µm und 1,5 µm liegt.

13. Lademechanismus nach einem der Ansprüche 9 bis 12, **dadurch gekennzeichnet, daß** die Chrom-Karbid-Schicht (56, 64) bzw. die Wolfram-Carbon-Wasserstoff-Schicht (56, 64) mittels eines Aufdampfverfahrens aufgedampft ist.

14. Laufwerk mit einem Lademechanismus nach einem der Ansprüche 1 bis 13.

15. Informationstechnisches Gerät mit einem Laufwerk nach Anspruch 14.

16. Autoradio mit einem Laufwerk nach Anspruch 14.

## Claims

1. A loading mechanism for loading and unloading an information disc (2) into/from an information-technology apparatus, a first guide (12) and a second guide (16) each having a groove (13, 18) being provided for the disc edge (2a), the second guide comprising a rotationally drivable transport wheel (16) which rolls the information disc (2) into and out of the apparatus for the purpose of loading and unloading, and the first guide (12) and the second guide (16) being supported so as to be movable, **characterized in that** the groove (13) of the first guide and the groove (18) of the second guide each have a pressure face (52, 53; 59, 60; 67, 68) which is inclined relative to the loading plane (25), the groove (13) of the first guide and the groove (18) of the second guide each have an inner surface (50, 57, 65) extending substantially perpendicularly to the loading plane (25), and the respective inner groove height (51, 58, 66) has been selected to be smaller than the thickness (71) of the information disc (2), in such manner that during the loading process the outer edge 2d of the information disc (2) is not in contact with the inner surfaces (50, 57, 65) of the grooves (13; 18).

2. A loading mechanism as claimed in Claim 1, **characterized in that** the groove (13) of the first guide and the groove (18) of the second guide each have a pressure face (52, 53; 59, 60; 67, 68) which is inclined relative to the loading plane at the upper side and at the lower side of the groove (13; 18).

3. A loading mechanism as claimed in Claim 1 or 2, **characterized in that** the information disc (2) is clamped in the grooves (13; 14) of the first guide (12) and the second guide (16) during the loading process.

4. A loading mechanism as claimed in Claim 3, **characterized in that** in an eject position the information disc (2) is clamped in the grooves (13; 18) of the first guide (12) and the second guide (16) in such a manner that a user should exert a minimum force of 0.7 N to pull said information disc out of the grooves (13; 18) by hand.

5. A loading mechanism as claimed in any one of the Claims 2 to 4, **characterized in that** the angles of inclination of the pressure faces (69, 70) of the first guide (12) lie in a range between 4° and 8° and the angles of inclination (52a, 53a; 61, 62) of the pressure faces of the second guide (18) lie in a range between 3° and 7°.

6. A loading mechanism as claimed in any one of the Claims 1 to 5, **characterized in that** the first guide comprises a supporting segment (12).

7. A loading mechanism as claimed in any one of the Claims 1 to 5, **characterized in that** the first guide comprises a rotationally drivable transport wheel (75).

8. A loading mechanism as claimed in any one of the Claims 1 to 7, **characterized in that** the modulus of elasticity of the surfaces of the pressure faces (52, 53; 59, 60; 67; 68) is greater than the modulus of elasticity of the information disc (2), the surfaces of the pressure faces (52, 53; 59, 60; 67; 68) have such a roughness and the information disc (2) is pressed against the pressure faces (52, 53; 59, 60; 67; 68) of the groove with such a force that a frictional engagement exists between the surface of the information disc (2) and the pressure faces (52, 53; 59, 60; 67; 68) during the loading process.

9. A loading mechanism as claimed in any one of the Claims 1 to 8, **characterized in that** the basic material of the transport wheel (18) is steel and the steel is covered with a layer (56) of chromium-carbide at least at the location of the pressure faces (59, 60).

10. A loading mechanism as claimed in any one of the Claims 1 to 8, **characterized in that** the basic material of the transport wheel (18) is steel and the steel is covered with a layer of tungsten-carbon-hydrogen (56) at least at the location of the pressure faces (59, 60).

11. A loading mechanism as claimed in any one of the Claims 1 to 10, **characterized in that** the basic material of the first guide (12) is steel and the steel is covered with a layer (64) of chromium-carbide or tungsten-carbon-hydrogen at least at the location of the pressure faces (67; 68).

12. A loading mechanism as claimed in any one of the Claims 1 to 11, **characterized in that** the maximum surface roughness Rₜ of the pressure faces (52, 53; 59,60; 67; 68) lies in a range between 2 µm and 15 µm and the arithmetical average roughness Rₐ lies in a range between 0.2 µm and 1.5 µm.

13. A loading mechanism as claimed in any one of the Claims 9 to 12, **characterized in that** the chromium-carbide layer (56, 64) or the tungsten-carbon-hydrogen layer (56, 64) has been deposited by means of a vapor-deposition process.

14. A deck including a loading mechanism as claimed in any one of the Claims 1 to 13.

15. An information-technology apparatus including a deck as claimed in Claim 14.

16. A car radio including a deck as claimed in Claim 14.

## Revendications

1. Mécanisme de chargement en vue du chargement et du déchargement d'un disque d'information (2) d'un appareil technique d'information, une première (12) et une deuxième (16) glissières présentant respectivement une rainure (13, 18), la deuxième glissière présentant une roue de transport (16) à entraîner à rotation qui fait pénétrer le disque d'information (2) dans l'appareil en vue du chargement dans un plan de chargement (25) ou le fait sortir de celui-ci en vue du déchargement et les première (12) et deuxième (16) glissières étant logées à déplacement,
**caractérisé en ce**
**que** la rainure (13) de la première glissière et la rainure (18) de la deuxième glissière présentent respectivement au moins une face de compression (52, 53; 59,60; 67,68) inclinée par rapport au plan de chargement (25), que la rainure (13) de la première glissière et la rainure (18) de la deuxième glissière présentent respectivement un bord interne (50, 57, 65) s'étendant essentiellement perpendiculairement au plan de chargement (25) et que la hauteur interne de la rainure (51, 58, 66) est respectivement inférieure à l'épaisseur (71) du disque d'information (2) de telle sorte que, pendant la procédure de chargement, le bord externe (2d) du disque d'information (2) ne soit pas touché par les bords internes (50, 57, 65) des rainures (13, 18).

2. Mécanisme de chargement selon la revendication 1, **caractérisé en ce que** la rainure (13) de la première glissière et la rainure (18) de la deuxième glissière présentent respectivement une face de compression (52, 53; 59, 60; 67, 68) inclinée par rapport au plan de chargement sur les faces supérieure et inférieure de la rainure (13; 18).

3. Mécanisme de chargement selon l'une des revendications 1 ou 2, **caractérisé en ce que** le disque d'information (2) se bloque pendant la procédure de chargement dans les rainures (13; 18) des première (12) et deuxième (16) glissières.

4. Mécanisme de chargement selon la revendication 3, **caractérisé en ce que** le disque d'information (2) se bloque dans une position d'éjection dans les rainures (13s; 18) des première (12) et deuxième (16) glissières de telle sorte qu'il doive être extrait des rainures (13; 18) par la main d'un opérateur avec une force minimale de 0,7 N.

5. Mécanisme de chargement selon l'une des revendications 2 à 4, **caractérisé en ce que** l'angle d'inclinaison des faces de compression (69, 70) de la première glissière (12) se situe dans une plage de 4 à 8° et l'angle d'inclinaison (52a, 53; 61, 62) des faces de compression de la deuxième glissière (18) se situe dans une plage de 3 à 7°.

6. Mécanisme de chargement selon l'une des revendications 1 à 5, **caractérisé en ce que** la première glissière présente un segment d'appui (12).

7. Mécanisme de chargement selon l'une des revendications 1 à 5, **caractérisé en ce que** la première glissière présente une roue de transport (75) à entraîner en rotation.

8. Mécanisme de chargement selon l'une des revendications 1 à 7, **caractérisé en ce que** le module d'élasticité des surfaces des faces de compression (52, 53; 59,60; 67, 68) est supérieur au module d'élasticité du disque d'information (2), que les surfaces des faces de compression (52, 53; 59, 60; 67, 68) présentent une rugosité et le disque d'information (2) est pressé avec une force telle contre les faces de compression (52, 53; 59,60; 67, 68) de la rainure que, pendant la procédure de chargement, un entraînement par friction entre le disque d'information (2) et les faces de compression (52, 53; 59, 60; 67, 68) est assuré pendant la procédure de chargement dans la région des faces de compression (52, 53; 59, 60; 67, 68).

9. Mécanisme de chargement selon l'une des revendications 1 à 8, **caractérisé en ce que** la matière de base de la roue de transport (18) est l'acier et que l'acier est recouvert respectivement d'une couche (56) de carbure de chrome, du moins dans la région des faces de compression (59, 60).

10. Mécanisme de chargement selon l'une des revendications 1 à 8, **caractérisé en ce que** la matière de base de la roue de transport (18) est l'acier et que l'acier est recouvert, du moins dans la région des faces de compression (59, 60), d'une couche d'hydrocarbure de tungstène (56).

11. Mécanisme de chargement selon l'une des revendications 1 à 10, **caractérisé en ce que** la matière de base de la première glissière (12) est l'acier et que l'acier est recouvert du moins dans la région des faces de compression (67,68) d'une couche (64) en carbure de chrome ou en hydrocarbure de tungstène.

12. Mécanisme de chargement selon l'une des revendications 1 à 11, **caractérisé en ce que** la rugosité superficielle maximale Rₜ des faces de compression (52, 53; 59, 60; 67, 68) se situe dans une plage de 2 µm à 15 µm et que la rugosité moyenne arithmétique Rₐ se situe dans une plage de 0,2 µm à 1,5 µm.

13. Mécanisme de chargement selon l'une des revendications 9 à 12, **caractérisé en ce que** la couche de carbure de chrome (56, 64) ou la couche d'hydrocarbure de tungstène (56, 64) est vaporisée à l'aide d'un procédé de vaporisation.

14. Dispositif d'entraînement avec un mécanisme de chargement selon l'une des revendications 1 à 13.

15. Appareil technique d'information avec un dispositif d'entraînement selon la revendication 14.

16. Autoradio avec un dispositif d'entraînement selon la revendication 14.
